# EUROPEAN PATENT SPECIFICATION

(11) **EP 0 336 459 B1**
(45) Date of publication and mention of the grant of the patent: **08.09.1993**
(21) Application number: 89200273.4
(22) Date of filing: 06.02.1989
(51) Int. Cl.: C08G 67/02

(54) **Polyketone polymer preparation**
Herstellung von Polyketon-Polymeren
Préparation de polycétones

(30) Priority: 10.02.1988 NL 8800324
(43) Date of publication of application: 11.10.1989
(73) Proprietor: SHELL INTERNATIONALE RESEARCH MAATSCHAPPIJ B.V., 2596 HR Den Haag (NL)
(72) Inventor: Geuze, Maarten Marinus, NL-1031 CM Amsterdam (NL)

(56) References cited:
- EP-A- 0 121 965

## Description

The invention relates to a process for the preparation of polymers of carbon monoxide with one or more olefinically unsaturated compounds, also known as polyketones.

High molecular weight linear polymers of carbon monoxide with one or more olefinically unsaturated compounds (referred to as A for short) in which the monomer units occur alternately and which polymers therefore consist of units of the general formula -(CO)-A′-, in which A′ represents a monomer unit originating from an applied monomer A, can be prepared by contacting the monomers with a solution of a palladium-containing catalyst composition in a diluent in which the polymers are insoluble or virtually insoluble. During the polymerization, the polymers are obtained in the form of a suspension in the diluent. Thus far, the preparation of the polymers was carried out mainly batchwise.

The batch preparation of the polymers is carried out conventionally by introducing catalyst into a reactor which contains diluent and monomers and is at the desired temperature and pressure. As polymerization proceeds, the pressure drops, the concentration of the polymers in the diluent increases and the viscosity of the suspension rises. Polymerization is continued until the viscosity of the suspension has reached such a high value that continuing the process further would create difficulties, for instance in connection with heat removal. During batchwise polymer preparation, not only the temperature but also the pressure can be kept constant, if desired, by adding monomers to the reactor during polymerization.

One of the most important properties of the present polymers is their bulk density. This plays an important role, both in the preparation and also in the refining, storage, transport and processing of the polymers. As regards the preparation of the polymers, it can be stated in approximate terms that the maximum permissible suspension concentration, expressed in kg polymer/100 kg suspension, is about one hundred times the bulk density expressed in g/ml. This means that when preparing a polymer with a bulk density of 0.1 g/ml, the maximum suspension concentration will be about 10, and when preparing a polymer with a bulk density of 0.5 g/ml, the maximum suspension concentration will be about 50. This means that increasing the bulk density by a factor of five enables about five times as much polymer to be prepared in the same reactor volume. As regards the further treatment of the polymers, such as filtration, washing and drying, the quantity of attached liquid is determined to a large extent by the bulk density of the polymers. It has been found, for instance, that a polymer with a bulk density of 0.1 g/ml binds about 5 g diluent or washing liquid per gram, while for a polymer with a bulk density of 0.5 g/ml the corresponding quantity is only about 0.25 g. This is naturally very important in connection with the quantity of liquid needed for washing the polymers and that subsequently has to be removed when drying the polymers. As regards transport and storage, the polymers exhibit a more attractive flow behaviour and occupy less space the higher their bulk densisty. As regards the processing of the polymers to shaped objects, polymers with a low bulk density often pose problems in the processing apparatus. Polymers with a low bulk density must often first be compressed, for instance by extrusion, in order to make them suitable for further processing in the customary apparatus. The higher the bulk density of the polymers, the less need there is for a pretreatment of the material, which is thus suitable as such for further processing.

The Applicant has investigated whether a change in the processing procedure of the batch preparation of the present polymers could influence the bulk density of the polymers. It was surprisingly found that a large increase of the polymer bulk density can be obtained when not all of the total amount of catalyst composition to be employed is introduced into the reactor at once at the outset of polymerization - as was customary thus far -, but when part of this total amount is introduced into the reactor at the outset of polymerization and the remainder at a later point of time. It was found that both the ratio of the quantity of catalyst composition that is added to the reactor at the outset of polymerization on the one hand and the remaining quantity that is added at a later point of time on the other hand, and also the moment at which the remaining quantity of catalyst composition is added are very important for a good result. More in particular, it has been found that for the batch preparation of the present polymers with a bulk density greater than 0.2 g/ml, care must be taken to ensure that 25-85% of the total amount of catalyst composition to be used is present in the reactor at the outset of polymerization and that the remaining quantity is not added until after the polymer concentration has reached a value of at least 0.2 g per 100 g polymer suspension.

The present patent application therefore relates to a process for the preparation of polymers, in which process a mixture of carbon monoxide with one or more olefinically unsaturated compounds is polymerized by contacting the mixture in a reactor with a solution of a palladium-containing catalyst composition in a diluent in which the polymers are insoluble or virtually insoluble, in which process the total amount of catalyst composition used contains from 10⁻⁷ to 10⁻³ gram atom of palladium per mol of olefinically unsaturated compound to be polymerized and the polymer preparation is carried out batchwise, with 25-85% of the total amount of catalyst composition to be used being present in the reactor at the outset of polymerization and the remainder of the catalyst composition to be used being added to the reactor only after the polymer concentration has reached a value of at least 0.2 g per 100 g polymer suspension.

The favourable effect which the modified procedure according to the invention has on the bulk density of the polymer, is obtained both when only a minor portion (for instance 25-30%) and when a major portion (for instance 80-85%) of the total amount of catalyst composition to be employed is present in the reactor at the outset of polymerization. The addition of the remaining quantity of catalyst composition may be carried out in one or more steps. If desired, the remaining quantity of catalyst composition may be added continuously. Both when adding the remaining quantity of catalyst composition in several steps and when adding it continuously, the addition may not be started until after the polymer concentration has reached a value of at least 0.2 g per 100 g polymer suspension, as is also the case when adding it in one step.

If in the process of the invention a procedure is chosen in which less than half the total amount of catalyst composition to be employed is present in the reactor at the outset of polymerization and therefore if more than half the amount must be added to the reactor at a later point of time, this addition is preferably carried out in two or more steps. As regards the amount of catalyst composition that is added in each of these steps, a procedure is preferred in which the amount of catalyst composition added in each step is at most half the amount of catalyst composition which at the moment of addition is already contained in the reactor. For instance, if at the outset of polymerization 40% of the total amount of catalyst composition to be employed is present in the reactor, further addition can very suitably be carried out in three steps in which 10, 20 and 30%, respectively, of the total amount of catalyst composition to be employed is added to the reactor. If in the process of the invention a procedure is chosen in which less than half the total amount of catalyst composition to be employed is present in the reactor at the outset of polymerization, it is preferred to wait with the addition of the remaining amount until the polymer concentration has reached a value of at least 1 g per 100 g polymer suspension.

In the process of the invention, a palladium-containing catalyst composition is employed. Very suited for the present purpose are catalyst compositions on the basis of
a) a palladium compound,
b) an anion of an acid with a pKa of less than 6, and
c) a diphosphine of the general formula R₁R₂P-R-PR₃R₄, wherein R₁, R₂, R₃ and R₄ represent similar or different hydrocarbyl groups which may optionally be substituted with polar groups and R represents a bivalent bridging group containing at least two carbon atoms in the bridge.

The palladium compound employed in the catalyst compositions as component a) is preferably a palladium salt of a carboxylic acid, and palladium acetate in particular. As component b), preferably an anion of an acid with a pKa of less than 4 (determined in aqueous solution at 18° C) is used in the catalyst compositions, and in particular an anion of an acid with a pKa of less than 2. More in particular, an anion of a sulphonic acid, such as para-toluenesulphonic acid, or an anion of a carboxylic acid, such as trifluoroacetic acid, is preferred. In the catalyst compositions, component b) is preferably present in a quantity of from 0.5 to 200 and in particular of from 1.0 to 100 equivalents per gram atom of palladium. Component b) may be incorported in the catalyst compositions in the form of an acid and/or in the form of a salt. Eligible salts are non-noble transition metal salts and in particular copper salts. If desired, components a) and b) can be used combined in a single compound. An example of such a compound is the complex Pd(CH₃CN)₂(O₃S-C₆H₄-CH₃)₂ which can be prepared by the reaction in acetonitrile either of palladium chloride with silver para-tosylate, or of palladium acetate with para-toluenesulphonic acid.

In the catalyst compositions, component c) is preferably present in a quantity of 0.1-2 and in particular of 0.75-1.5 mol per mol of palladium compound. The groups R₁, R₂, R₃ and R₄ present in the compounds used as component c) are preferably aryl groups optionally substituted with polar groups, and in particular phenyl groups optionally substituted with polar groups. Preference is given to components c) in which the groups R₁, R₂, R₃ and R₄ are similar to one another.

In the compounds with the general formula R₁R₂P-R-PR₃R₄ used in the catalyst compositions as components c), R represents a bivalent bridging group containing at least two carbon atoms in the bridge. Preferably, the bridging group R contains three atoms in the bridge, at least two of which are carbon atoms. Examples of suitable bridging groups R are the -CH₂-CH₂-CH₂- group, the -CH₂-C(CH₃)₂-CH₂-group, the -CH₂-Si(CH₃)₂-CH₂ group and the -CH₂-C(R₅)(R₆)-CH₂-group in which R₅ is a methyl group and R₆ a diphenyl-phosphino-methyl group. A diphosphine that can be very suitably used as components c) in the catalyst composition is 1,3-bis(diphenyl-phosphino) propane.

In order to enhance the activity of the present catalyst compositions, preferably a 1,4-quinone is incorporated as component d). Besides optionally alkyl-substituted 1,4-benzoquinones, other 1,4-quinones, such as optionally alkyl-substituted 1,4-naphthoquinones, may also be used. Preference is given to the use of 1,4-benzoquinone and 1,4-naphthoquinone as activity promoter. The quantity of 1,4-quinone used is preferably 10-1000 mol and in particular 25-250 mol per gram atom of palladium.

The polymerization of the invention is carried out in a diluent in which the polymers are insoluble or virtually insoluble. Suitable diluents are either single diluents or compound diluents. Examples of single diluents are lower aliphatic alcohols, such as methanol and ethanol. Examples of compound diluents are mixtures of lower aliphatic alcohols and lower aliphatic ketones, such as mixtures of methanol with acetone or with methyl ethyl ketone. In the present polymerization, preferably a lower aliphatic alcohol, and in particular methanol, is used. As a rule, the same liquid is used as solvent for the palladium-containing catalyst composition as is used as diluent for the polymerization.

Olefinically unsaturated compounds that can be suitably polymerized with carbon monoxide according to the invention are both compounds consisting exclusively of carbon and hydrogen and compounds which, in addition to carbon and hydrogen, contain one or more hetero-atoms. The process of the invention is preferably applied in the preparation of polymers of carbon monoxide with one or more olefinically unsaturated hydrocarbons. Examples of suitable hydrocarbon monomers are ethene and other alpha-olefins, such as propene, butene-1, hexene-1 and octene-1, as well as styrene and alkyl-substituted styrenes, such as p-methyl-styrene and p-ethyl-styrene. The process of the invention is in particular very suitable for application in the preparation of copolymers of carbon monoxide with ethene and for the preparation of terpolymers of carbon monoxide with ethene and another olefinically unsaturated hydrocarbon, in particular propene.

The quantity of catalyst composition employed in the preparation of the polymers may vary within wide limits. The quantity of catalyst used per mol of olefinically unsaturated compound to be polymerized contains 10⁻⁷-10⁻³ and in particular 10⁻⁶-10⁻⁴ gram atom of palladium.

The preparation of the polymers is preferably carried out at a temperature of 20-200° C and a pressure of 1-200 bar and in particular at a temperature of 30-150° C and a pressure of 20-100 bar. The molar ratio of olefinically unsaturated compounds relative to carbon monoxide in the mixture to be polymerized is preferably 10:1-1:5 and in particular 5:1-1:2.

The invention will now be illustrated with the aid of the following examples.

### Example 1 (comparative)

A carbon monoxide/ethene/propene terpolymer was prepared as follows. A mechanically stirred autoclave with a capacity of 150 l was charged with 56 kg methanol. After the contents of the autoclave were brought to 45° C, ethene, propene and carbon monoxide were introduced in such quantities that the ethene partial pressure was 13.5 bar, the propene partial pressure was 8.5 bar and the carbon monoxide partial pressure was 23 bar. Subsequently, a catalyst solution was introduced into the autoclave which comprised
450 ml methanol,
150 ml toluene,
2 mmol palladium acetate,
40 mmol trifluoro acetic acid, and
2 mmol 1,3-bis(diphenylphosphino) propane.

During polymerization, the pressure was kept at 45 bar by the introduction of a 1:1 carbon monoxide/ethene mixture. Polymerization was terminated after 96 hours by cooling the reaction mixture to room temperature and releasing the pressure. The terpolymer was filtered off, washed with methanol and dried at 50° C.

The yield was 7.7 kg of terpolymer with a bulk density of 0.08 g/ml.

### Example 2 (comparative)

A carbon monoxide/ethene/propene terpolymer was prepared substantially in the same way as the terpolymer of Example 1, but with the following differences
a) 95% of the total amount of catalyst solution mention
   ed in Example 1 was present in the autoclave at the outset of polymerization and the remaining 5% was added to the autoclave at the moment when the polymer concentration had reached a value of 6.0 g per 100 g polymer suspension, and
b) the reaction time was 80 hours instead of 96 hours.

The yield was 6.8 kg of terpolymer with a bulk density of 0.11 g/ml.

### Example 3 (comparative)

A carbon monoxide/ethene/propene terpolymer was prepared substantially in the same way as the terpolymer of Example 1, but with the following differences
a) 15% of the total amount of catalyst solution mentioned in Example 1 was present in the autoclave at the outset of polymerization and the remaining 85% was added to the autoclave at the moment when the polymer concentration had reached a value of 1.0 g per 100 g polymer suspension, and
b) the reaction time was 90 hours instead of 96 hours.

The yield was 7.2 kg of terpolymer with a bulk density of 0.09 g/ml.

### Example 4 (comparative)

A carbon monoxide/ethene/propene terpolymer was prepared substantially in the same way as the terpolymer of Example 1, but with the following differences
a) 50% of the total amount of catalyst solution mentioned in Example 1 was present in the autoclave at the outset of polymerization and the remaining 50% was added to the autoclave at the moment when the polymer concentration had reached a value of 0.1 g per 100 g polymer suspension, and
b) the reaction time was 85 hours instead of 96 hours.

The yield was 7.0 kg of terpolymer with a bulk density of 0.085 g/ml.

### Example 5

A carbon monoxide/ethene/propene terpolymer was prepared substantially in the same way as the terpolymer of Example 1, but with the following differences
a) 72% of the total amount of catalyst solution mentioned in Example 1 was present in the autoclave at the outset of polymerization and the remaining 28% was added to the autoclave at the moment when the polymer concentration had reached a value of 2.1 g per 100 g polymer suspension, and
b) the reaction time was 105 hours instead of 96 hours.

The yield was 7.2 kg of terpolymer with a bulk density of 0.40 g/ml.

### Example 6

A carbon monoxide/ethene/propene terpolymer was prepared substantially in the same way as the terpolymer of Example 1, but with the following differences
a) the reaction temperature was 55° C instead of 45° C,
b) 83% of the total amount of catalyst solution mentioned in Example 1 was present in the autoclave at the outset of polymerization and the remaining 17% was added to the autoclave at the moment when the polymer concentration had reached a value of 0.3 g per 100 g polymer suspension, and
c) the reaction time was 80 hours instead of 96 hours.

The yield was 7.5 kg of terpolymer with a bulk density of 0.37 g/ml.

### Example 7

A carbon monoxide/ethene/propene terpolymer was prepared substantially in the same way as the terpolymer of Example 1, but with the following differences
a) one third of the total amount of catalyst solution mentioned in Example 1 was present in the autoclave at the outset of polymerization and the remaining two thirds were added to the autoclave in two equal portions at a later point of time, the first portion at the moment when the polymer concentration had reached a value of 2.0 g per 100 g polymer suspension, and the second portion at the moment when the polymer concentration had reached a value of 4.0 g per 100 g polymer suspension, and
b) the reaction time was 125 hours instead of 96 hours.

The yield was 7.0 kg of terpolymer with a bulk density of 0.32 g/ml.

Of Examples 1-7, Examples 5-7 are in accordance with the invention. In these examples, 72, 83 and 33%, respectively, of the total amount of catalyst composition to be employed was present in the autoclave at the outset of polymerization and the remaining amount of catalyst composition was added to the autoclave at the moment when the polymer concentration had reached values of 2.1, 0.3 and 2.0 g per 100 g polymer suspension, respectively, and 4.0 g per 100 g polymer suspension at the moment of the second addition. In Examples 5-7, high bulk densities, of from 0.32 to 0.40 g/ml, were obtained. Examples 1-4 fall outside the scope of the invention and have been included in the patent application for comparison. Example 1 concerns the conventional batch polymer preparation in which the total amount of catalyst composition to be employed is present in the autoclave at the outset of polymerization. In Examples 2-4, part of the total amount of catalyst composition to be employed was present in the autoclave at the outset of polymerization and the remaining amount was added to the autoclave at a later point of time, yet the criteria of the invention were not met in these examples, because the amount of catalyst composition present at the outset of polymerization was too high (95% in Example 2) or too low (15% in Example 3), or because the remaining amount of catalyst composition was added at a moment when the polymer concentration was still too low (0.1 g/100 g polymer suspension in Example 4). In Examples 1-4, low bulk densities, of from 0.08 to 0.11, were obtained.

With the aid of ¹³ C-NMR analysis it was established that the carbon monoxide/ethene/propene terpolymers prepared according to Examples 1-7 had a linear structure and consisted of units of the formula -(CO)-(C₂H₄)- and units of the formula -(CO)-(C₃H₆)-, which units occurred randomly distributed within the terpolymers.

## Claims

1. Process for the preparation of polymers, in which a mixture of carbon monoxide with one or more olefinically unsaturated compounds is polymerized by contacting the mixture in a reactor with a solution of a palladium-containing catalyst composition in a diluent in which the polymers are insoluble or virtually insoluble, the total quantity of catalyst composition used contains from 10⁻⁷ to 10⁻³ gram atom of palladium per mol of olefinically unsatureated compound to be polymerized and the preparation is carried out batchwise, characterized in that 25-85% of the total amount of catalyst composition to be employed is present in the reactor at the outset of polymerization and that the remainder of the catalyst composition to be employed is added to the reactor only after the polymer concentration has reached a value of at least 0.2 g per 100 g polymer suspension.

2. A process as claimed in claim 1, characterized in that if less than half the total amount of catalyst composition to be employed is present in the reactor at the outset of polymerization, the remainder of the total amount of catalyst composition to be employed is added to the reactor in two or more steps.

3. A process as claimed in claim 2, characterized in that the amount of catalyst composition added in each step is at most half the amount of catalyst composition that is present in the reactor at the moment of addition.

4. A process as claimed in claim 2 or 3, characterized in that the remaining amount of catalyst composition is not added until after the polymer concentration has reached a value of at least 1 g per 100 g polymer suspension.

5. A process as claimed in one or more of claims 1-4, characterized in that the catalyst composition used is based upon
a) a palladium compound,
b) an anion of an acid with a pKa of less than 6, and
c) a diphosphine of the general formula R₁R₂P-R-PR₃R₄, wherein R₁, R₂, R₃ and R₄ represent similar or different hydrocarbyl groups which may optionally be substituted with polar groups and R represents a bivalent bridging group containing at least two carbon atoms in the bridge.

6. A process as claimed in one or more of claims 1-5, characterized in that the polymerization is carried out in a lower aliphatic alcohol, such as methanol, as the diluent.

7. A process as claimed in one or more of claims 1-6, characterized in that the olefinically unsaturated compounds used are hydrocarbons, such as ethene or a mixture of ethene with another olefinically unsaturated hydrocarbon, such as propene.

8. A process as claimed in one or more of claims 1-7, characterized in that it is carried out at a temperature of 30-150° C, a pressure of 20-100 bar and a molar ratio of the olefinically unsaturated compounds relative to carbon monoxide in the mixture to be polymerized of 5:1-1:2, and that per mol of olefinically unsaturated compound to be polymerized, such a quantity of catalyst composition is used as to contain 10⁻⁶-10⁻⁴ gram atom of palladium.

## Patentansprüche

1. Verfahren zur Herstellung von Polymeren, worin ein Gemisch aus Kohlenmonoxid mit einer oder mit mehreren olefinisch ungesättigten Verbindungen durch Inkontaktbringen des Gemisches mit einer Lösung einer Palladium-hältigen Katalysatorzusammensetzung in einem Reaktor in einem Verdünnungsmittel polymerisiert wird, in welchem Verdünnungsmittel die Polymeren unlöslich oder praktisch unlöslich sind, die Gesamtmenge an verwendeter Katalysatorzusammensetzung von 10⁻⁷ bis 10⁻³ Grammatom Palladium je Mol olefinisch ungesättigter, zu polymerisierender Verbindung enthält und die Herstellung ansatzweise ausgeführt wird, dadurch gekennzeichnet, daß 25 bis 85 % der Gesamtmenge an zu verwendender Katalysatorzusammensetzung zu Polymerisationsbeginn im Reaktor vorliegen und daß der Rest der zu verwendenden Katalysatorzusammensetzung erst dann dem Reaktor zugeführt wird, sobald die Polymerkonzentration einen Wert von wenigstens 0,2 g je 100 g Polymersuspension erreicht hat.

2. Verfahren nach Anspruch 1, dadurch gekennzeichnet, daß dann, wenn weniger als die Hälfte der Gesamtmenge an zu verwendender Katalysatorzusammensetzung zu Polymerisationsbeginn im Reaktor vorliegt, der Rest der Gesamtmenge der zu verwendenden Katalysatorzusammensetzung in zwei oder mehreren Stufen dem Reaktor zugeführt wird.

3. Verfahren nach Anspruch 2, dadurch gekennzeichnet, daß die in jeder Stufe zugeführte Katalysatormenge höchstens die Hälfte der Menge an Katalysatorzusammensetzung ausmacht, die im Zeitpunkt der Zugabe im Reaktor vorliegt.

4. Verfahren nach Anspruch 2 oder 3, dadurch gekennzeichnet, daß die Restmenge an Katalysatorzusammensetzung erst dann zugesetzt wird, sobald die Polymerkonzentration einen Wert von wenigstens 1 g je 100 g Polymersuspension erreicht hat.

5. Verfahren nach einem oder mehreren der Ansprüche 1 bis 4, dadurch gekennzeichnet, daß die eingesetzte Katalysatorzusammensetzung aufgebaut ist auf
a) einer Palladiumverbindung,
b) einem Anion einer Säure mit einem pKa-Wert von kleiner als 6 und
c) einem Diphosphin der allgemeinen Formel R₁R₂P-R-PR₃R₄, worin R₁, R₂, R₃ und R₄ gleiche oder verschiedene Kohlenwasserstoffgruppen bedeuten, die gegebenenfalls durch polare Gruppen substituiert sein können und R eine zweiwertige Brückengruppe darstellt, die wenigstens zwei Kohlenstoffatome in der Brücke enthält.

6. Verfahren nach einem oder mehreren der Ansprüche 1 bis 5, dadurch gekennzeichnet, daß die Polymerisation in einem niederen aliphatischen Alkohol, wie Methanol, als Verdünnungsmittel ausgeführt wird.

7. Verfahren nach einem oder mehreren der Ansprüche 1 bis 6, dadurch gekennzeichnet, daß die verwendeten olefinisch ungesättigten Verbindungen Kohlenwasserstoffe sind, wie Ethen, oder ein Gemisch aus Ethen mit einem weiteren olefinisch ungesättigten Kohlenwasserstoff, wie Propen.

8. Verfahren nach einem der mehreren der Ansprüche 1 bis 7, dadurch gekennzeichnet, daß es bei einer Temperatur von 30 bis 150°C, einem Druck von 20 bis 100 bar und einem Molverhältnis der olefinisch ungesättigten Verbindungen zu Kohlenmonoxid in dem zu polymerisierenden Gemisch von 5:1 bis 1:2 ausgeführt wird, und daß je Mol zu polymerisierender olefinisch ungesättigter Verbindung eine solche Menge an Katalysatorzusammensetzung verwendet wird, daß 10⁻⁶ bis 10⁻⁴ Grammatom Palladium vorliegen.

## Revendications

1. Procédé pour la préparation de polymères, dans lequel un mélange d'oxyde de carbone avec un ou plusieurs composés oléfiniquement insaturés est polymérisé par mise en contact du mélange dans un réacteur avec une solution d'une composition catalytique contenant du palladium dans un diluant dans lequel les polymères sont insolubles ou à peu près insolubles, la quantité totale de composition catalytique utilisée contient de 10⁻⁷ à 10⁻³ atomegramme de palladium par mole de composé oléfiniquement insaturé à polymériser et la préparation est effectuée d'une manière discontinue, caractérisé en ce qu'une proportion de 25 à 85 % de la quantité totale de composition catalytique à utiliser est présente dans le réacteur au début de la polymérisation et que le reste de la composition catalytique à utiliser est ajouté dans le réacteur seulement après que la concentration du polymère a atteint une valeur d'au moins 0,2 g par 100 g de suspension de polymère.

2. Un procédé selon la revendication 1, caractérisé en ce que si moins de la moitié de la quantité totale de composition catalytique à utiliser est présente dans le réacteur au début de la polymérisation, le reste de la quantité totale de composition catalytique à utiliser est ajouté dans le réacteur en deux étapes ou plus.

3. Un procédé selon la revendication 2, caractérisé en ce que la quantité de composition catalytique ajoutée dans chaque étape est au maximum la moitié de la quantité de composition catalytique qui est présente dans le réacteur au moment de l'addition.

4. Un procédé selon la revendication 2 ou 3, caractérisé en ce que la quantité restante de composition catalytique n'est ajoutée qu'après que la concentration du polymère a atteint une valeur d'au moins 1 g par 100 g de suspension de polymère.

5. Un procédé selon une ou plusieurs des revendications 1-4, caractérisé en ce que la composition catalytique utilisée est à base de
a) un composé du palladium,
b) un anion d'un acide d'un pKa de moins de 6 et
c) une diphosphine de la formule générale R₁R₂P-R-PR₃R₄, dans laquelle R₁, R₂, R₃ et R₄ représentent des groupes hydrocarbyle identiques ou différents qui peuvent éventuellement être substitués par des groupes polaires et R représente un groupe bivalent formant pont contenant au moins deux atomes de carbone dans le pont.

6. Un procédé selon une ou plusieurs des revendications 1-5, caractérisé en ce que la polymérisation est conduite dans un alcool aliphatique inférieur, tel que le méthanol, comme diluant.

7. Un procédé selon une ou plusieurs des revendications 1-7, caractérisé en ce que les composés oléfiniquement insaturés utilisés sont des hydrocarbures, tels que l'éthène ou un mélange d'éthène avec un autre hydrocarbure oléfiniquement insaturé, tel que le propène.

8. Un procédé selon une ou plusieurs des revendications 1-7, caractérisé en ce qu'il est mis en oeuvre à une température de 30-150°C, une pression de 20-100 bars et un rapport molaire des composés oléfiniquement insaturés à l'oxyde de carbone dans le mélange à polymériser compris entre 5:1 et 1:2 et que, par mole de composé oléfiniquement insaturé à polymériser, on utilise une quantité de composition catalytique telle qu'elle contienne 10⁻⁶-10⁻⁴ atome-gramme de palladium.
